Europäisches Patentamt

(19) European Patent Office

Office européen des brevets

(11) Publication number : 0 436 393 A2

(12) # EUROPEAN PATENT APPLICATION

(21) Application number : 90314350.1

(22) Date of filing : 27.12.90

(51) Int. Cl.⁵ : **C08G 12/28**, C08G 12/42, B32B 27/04

(30) Priority : 28.12.89 JP 338476/89
28.12.89 JP 338477/89
28.12.89 JP 338478/89
28.12.89 JP 338479/89
06.02.90 JP 25161/90

(43) Date of publication of application :
10.07.91 Bulletin 91/28

(84) Designated Contracting States :
DE FR GB IT

(71) Applicant : NIPPON SHOKUBAI KAGAKU
KOGYO CO. LTD.
1-1, Koraibashi, 4-chome
Chuo-ku Osaka-shi Osaka-fu (JP)

(72) Inventor : Iriguchi, Jirou
9-10-207, Takashiro-cho
Suita-shi, Osaka-fu (JP)
Inventor : Iida, Toshiya
2-7-7, Ikunonishi, Ikuno-ku
Osaka-shi, Osaka-fu (JP)
Inventor : Yatagai, Hidetaka
3-23-2, Koshienguchi
Nishinomiya-shi, Hyogo-ken (JP)
Inventor : Yamada, Souichi
63, Takedauchihatacho, Fushimi-ku
Kyoto-shi, Kyoto-fu (JP)

(74) Representative : Rees, David Christopher et al
Kilburn & Strode 30 John Street
London WC1N 2DD (GB)

(54) Methods for manufacture of methylolated cyclohexanecarboguanamine and alkyletherification product thereof and laminated sheet using the products.

(57)   A method for the manufacture of an methylolated cyclohexanecarboguanamine by subjecting cyclohexanecarboguanamine to the methylolating reaction with a formaldehyde while keeping the amount of an alcohol present during the process of methylolating reaction below 20% by weight based on the amount of said formaldehyde and keeping the pH value of the reaction system in the range of 8 to 13 and the temperature thereof in the range of 50° to 80°C between the time said reaction is started and the time said reaction is completed.

EP 0 436 393 A2

# METHODS FOR MANUFACTURE OF METHYLOLATED CYCLOHEXANECARBOGUANAMINE AND ALKYLETHERIFICATION PRODUCT THEREOF AND LAMINATED SHEET USING THE PRODUCTS

## BACKGROUND OF THE INVENTION

### Field of the Invention

This invention relates to methods for the manufacture of a methylolated cyclohexanecarboguanamine and an alkyletherification product thereof and a laminated sheet using the products. More particularly, it relates to methods for efficiently manufacturing a highly methylolated cyclohexanecarboguanamine and an alkyletherification product thereof by improving the conversion of the reaction between cyclohexanecarboguanamine and a formaldehyde and making effective use of the formaldehyde and a laminated sheet using the products.

### Description of the Prior Art

Methods for the production of an methylolated cyclohexanecarboguanamine resin by the reaction of cyclohexanecarboguanamine with a formaldehyde have been known to the art. They are disclosed in JP-B-48-17,756(1973), U.S. Patent No. 2,859,188, and European Patent No. 0,292,306, for example. These publications, however, are short of mentioning a technique for producing a highly methylolated cyclohexanecarboguanamine by heightening the conversion of a formaldehyde and effectively utilizing of formaldehyde.

Concerning melamine and benzoguanamine which are heretofore known amino compounds, no specific technique making effective use of a formaldehyde has been known to the art. This is because highly methylolated products of these compounds are solid substances sparingly soluble in water at normal room temperature and are precipitated out of the reaction system and, consequently, the conversion of a formaldehyde can be heightened without using any specific technique. Methods for the production of a highly methylolated benzoguanamine have been known to the art. They are disclosed in British Patent No. 1,219,950, U.S. Patent No. 3,091,612, and Journal of Applied Polymer Science, 13, 555 (1969). These methods invariably rely on a procedure which comprises causing about 6 mols of 37 wt% of formalin to react with 1 mol of benzoguanamine, cooling the resultant reaction solution thereby inducing precipitation of tetramethylolated benzoguanamine in a solid state, and separating the precipitate by filtration.

In these methods, the yield of tetramethylolated benzoguanamine at the end of purification is 79.5%, indicating that in the reaction of benzoguanamine with a formaldehyde, the conversion obtained without using any specific technique is already sufficiently high. Since the unaltered formaldehyde remains in the aqueous solution after the reaction, it can be easily put to use again.

When such a method is applied in its unmodified form to cyclohexanecarboguanamine, however, the number of mols of formaldehyde added to the resultant methylolated cyclohexanecarboguanamine is as small as 3.2 on the average per molecule of the cyclohexanecarboguanamine. Further, since the methylolated cyclohexanecarboguanamine is in a liquid state at normal room temperature and possesses high water-solubility, the separation thereof from the reaction solution is attained only with difficulty. The unaltered formaldehyde which occurs herein, unlike that which occurs in the reaction involving the heretofore known benzoguanamine or melamine, cannot be easily put to use again. In the production of a methylolated cyclohexanecarboguanamine, therefore, it has been necessary to decrease the consumption of a formaldehyde by heightening the conversion in the reaction of the cyclohexanecarboguanamine with a formaldehyde.

The technique for heightening the conversion of a formaldehyde in the reaction of methylolation of cyclohexanecarboguanamine has never been known to the art. When the methylolated cyclohexanecarboguanamine is alkyletherified by the conventional method, the alkyletherification ratio is 70% at most.

An object of this invention, therefore, is to provide methods for the manufacture of a methylolated cyclohexanecarboguanamine and an alkyletherified product thereof, with the conversion in the methylolation of cyclohexanecarboguanamine heightened and the consumption of a formaldehyde decreased, and a laminated sheet using the product mentioned above.

## SUMMARY OF THE INVENTION

The object described above is accomplished by a method for the manufacture of a methylolated cyclohexanecarboguanamine by subjecting a cyclohexanecarboguanamine to the methylolating reaction with a formaldehyde while keeping the amount of an alcohol (A) occurring during the process of the methylolating reaction below 20% by weight based on the amount of the formaldehyde and keeping the pH value of the reaction system in the range of 8 to 13 and the temperature thereof in the range of 50° to 80°C between the time the reaction is started and the time the reaction is completed.

The object is further accomplished by a method for the manufacture of an alkyletherified cyclohexanecarboguanamine by subjecting the methylolated cyclohexanecarboguanamine obtained by the above method to the alkyletherifying reaction with an alcohol (B).

The object is also accomplished by a laminated sheet produced by a process of manufacture which comprises impregnating a sheetlike article with a liquid containing a methylolated cyclohexanecarboguanamine 3.6 to 4.0 in degree of methylolation or an alkyletherified cyclohexanecarboguanamine 3.6 to 4.0 in degree of methylolation and 90 to 100% in ratio of alkyl etherification and subsequently curing the impregnated sheetlike article.

The term "the degree of methylolation" used herein means the average number of mols of formaldehyde added per molecule of cyclohexanecarboguanamine and the term "ratio of alkyletherification" the ratio of the methylol group undergone alkyletherification.

For a fixed amount of formaldehyde, the method of this invention yields a methylolated cyclohexanecarboguanamine having a high degree of methylolation and an alkyletherified product thereof having a high ratio of alkyletherification with a high productional efficiency as compared with the conventional method. It also allows a decrease in the consumption of the formaldehyde. The methylolated cyclohexanecarboguanamine obtained by the method of this invention is favorably used for molding material, faced board, faced plywood, etc. and the alkyletherified product obtained by the reaction of the methylolated cyclohexanecarboguanamine with an alcohol is likewise used favorably for faced board or faced plywood.

## EXPLANATION OF THE PREFERRED EMBODIMENT

We have continued a diligent study in search of the cause for the low conversion in the reaction of a cyclohexanecarboguanamine with a formaldehyde effected by the conventional method, to find that the occurrence of an alcohol (A) impedes an improvement in the degree of methylolation. The term "alcohol (A)" as used herein refers not to an alcohol originating in a formaldehyde but to an alcohol used as a stabilizer or a solvent for formaldehyde such as, for example, methyl alcohol, ethyl alcohol, propyl alcohol, or butyl alcohol. Generally, the content of the alcohol (A) is calculated by gas chromatographic analysis or by measurement of specific gravity. The aqueous 37% formalin solution in popular use generally contains about 10% by weight, based on the amount of the aqueous solution, or about 27% by weight, based on the amount of the formaldehyde, of methyl alcohol. It is known that the addition of this alcohol (A) improves the solubility of the formaldehyde in water and the stability of the aqueous soluion. It is really surprising to note that the alcohol (A) of this nature should impede the methylolating reaction.

As disclosed in U.S. Patent No. 2,998,411, for example, the methylolating reaction of melamine is impeded by the presence of an alcohol (A). Concerning the cause for impediment of this reaction, the aforementioned U.S. patent gives at column 1, line 63, to column 2, line 22, a statement to the effect that a methylolated melamine possessing a low degree of methylolation is precipitated in the reaction solution in the presence of an alcohol (A) and the methylolating reaction consequently ceases to proceed. In the case of the methylolating reaction of cyclohexanecarboguanamine, the reaction solution forms absolutely no precipitate in the presence of an alcohol (A). Thus, the cause for impediment established with respect to melamine cannot be applied as it is to the methylolating reaction of cyclohexanecarboguanamine. The cause for the impediment imposed by an alcohol (A) on the methylolating reaction of cyclohexanecarboguanamine has not yet been elucidated. This impediment is explained by a postulate that since an alcohol (A) is used as the stabilizer for formalin, the reaction between the stabilized formaldehyde and cyclohexanecarboguanamine proceeds with difficulty as compared with the reaction with benzoguanamine. As surmised from the foregoing explanation, the amount of the alcohol(A) to be used in the reaction is desired to be small. Generally, this amount is not more than 20% by weight, preferably not more than 10% by weight, based on the amount of the formaldehyde. Though the absolute absence of this alcohol (A) is ideal, very satisfactory results are obtained generally when the amount is not more than 5% by weight.

For the production of a highly methylolated cyclohexanecarboguanamine having a small condensate content, it is necessary that in the reaction of a cyclohexanecarboguanamine with a formaldehyde, the pH value of the reaction system should be kept in the range of 8 to 13 and the temperature thereof in the range of 50° to 80°C between the time the reaction is started and the time it is completed. If the pH value is smaller than 8 or larger than 13, the reaction of condensation readily proceeds, the pH value fluctuates heavily between the time the reaction is started and the time the reaction is completed, and the adjustment of pH value requires use of a large amount of a buffer. For the purpose of repressing the reaction of condensation and decreasing the fluctuation of pH value more effectively, the pH value is preferable to be kept in the range of 9 to 11, preferably 9.5 to 10.5. If the temperature is lower than 50°C, the reaction of cyclohexanecarboguanamine with formaldehyde is retarded. If this temperature is higher than 80°C, the reaction of condensation and the reverse reaction of methylolation readily proceed, the pH value fluctuates heavily between the time the reaction is stated and the time it is completed, and the retention of the pH value in the range of 8 to 13 likewise requires use of a large amount of a buffer. The use of the buffer in such a large amount consequently increases the amount of water to be used. The presence of the increased amount of water is undesirable for the reason to be given hereinbelow. The temperature is preferable to be in the range of 55° to 70°C for the purpose of decreasing the fluctuation of pH value between the time the reaction is started and the time it is completed and repressing the reaction of condensation and the reverse reaction of methylolation.

The improvement in the degree of methylolation aimed at by the present invention is not attained unless the amount of an alcohol (A) and the pH value and temperature of the reaction system are kept in the ranges specified above during the process of the reaction. When any one of these conditions deviates from the relevant range, the object of this invention can no longer be fulfilled. When the amount of an alcohol (A) is kept within the range thereof but the pH value or temperature of the reaction system deviates from the range thereof, for example, the condensate occurs in an unduly large amount. Conversely, when the pH value or temperature of the reaction system is kept within the range thereof but the amount of an alcohol (A) deviates from the range thereof, the resultant product possesses a degree of methylolation of only about 3.2.

Incidentally, Example 4 cited in European Patent No. 0,292,306 discloses a reaction using paraformaldehyde and limiting the amount of an alcohol (A) to 0% by weight based on the formaldehyde. In this example, there is found a statement that in the methylolating reaction of a formaldehyde with cyclohexanecarboguanamine, the pH value of the reaction system was 8.3 and the tempeture thereof was 90°C at the end of the reaction. This example and the method of manufacture of the present invention differ only in terms of temperature. In this example, since the temperature exceeds 90°C, the reverse reaction of methylolation readily proceeds and the degree of methylolation declines and the pH value fluctuates largely between the time the reaction is started and the time it is completed and the retention of the pH value in the range of 8 to 13 is attained only with difficulty. In fact, in Example 4 cited in European Patent No. 0,292,306, the reaction time at 90°C is as brief as 10 minutes. If the amount of an alcohol (A) to be used and the temperature and pH value of the reaction system which characterize the present invention are not wholly satisfied, a highly methylolated cyclohexanecarboguanamine possessing a small condensate content can no longer be produced. Absolutely no mention about the effect of the amount of an alcohol (A) on the methylolating reaction is found anywhere in European Patent No. 0,292,306.

We have made a dilgent study in search of a method for heightening the degree of methylolation, to find that the effect of this invention is further enhanced by decreasing the amount of water to be used during the process of reaction. Though the effect of water on the methylolating reaction has not yet been fully elucidated, it is inferred that water accelerates the reverse reaction of methylolation. The amount of water to be used in the reaction is preferable to be not more than 100% by weight, preferably not more than 50% by weight, based on the amount of formaldehyde.

The water which is present in the reaction system of the present invention comprises the water used as a solvent and the water contained in the formaldehyde. In this invention, the water content in the formaldehyde is regarded as the balance which remains after the subtraction of the content of formaldehyde and that of alcohol (A). The expression "80% paraformaldehyde" as used in this invention means that the paraformaldehyde contains 20% of water.

In improving the conversion of formaldehyde, it is effective to decrease the amount of an alcohol(A) and that of water occurring in the reaction system as described above. When the decrease is excessive, however, it possibly degrades the stirring effect, impairs the uniformity of temperature in the reaction system, and prevents the methylolating reaction from proceeding smoothly. It has been found that the use of a solvent substantially insoluble in water in the methylolating reaction brings about an effect of precluding the disadvantage described above and promoting the methylolating reaction as well.

The substantially water-insoluble solvent which is used in the reaction has no particular restriction except for the requirement that this solvent, when combined with water to form a binary system, should exhibit that the solubility of water is not more than 1.0% by weight in this solvent at 20°C and, at the same time, avoid impeding the reaction of cyclohexanecarboguanamine with a formaldehyde. This solvent is preferably an aromatic and/or an aliphatic hydrocarbon, more preferably an aromatic hydrocarbon, and still more preferably an alkyl-substituted benzene and/or an unsubstituted benzene. The solvents which answer the description include hexanes, heptanes, octanes, nonanes, decanes, cyclohexane, benzene, toluene, xylene, ethyl benzene, and pseudocumene, for example. The xylene is known to react with formaldehydes as in a xylene-formaldehyde resin. It is substantially intact, however, under the conditions involved in the reaction of the present invention.

Though the amount of the solvent to be used is not specifically limited, it is desirable for the purpose of enabling the aforementioned effect to be manifested to the fullest possible extent that the amount should be in the range of 0.7 to 10 parts, preferably 1.5 to 4 parts, by weight based on 1 part by weight of the formaldehyde.

The formaldehydes which are effectively usable in the reaction include paraformaldehyde, trioxane, formalin, and concentrated formalin, for example. Since the reaction prefers use of alcohol (A) and water in as small amounts as possible, it is preferable to use paraformaldehyde or highly concentrated formalin. The paraformaldehyde proves to be particularly preferable in respect that it is readily available on a commercial scale and it is excellent in stability of storage. When the paraformaldehyde is used, it is desired to have a particle diameter distribution such that not less than 90% of the particles thereof pass through a 32-mesh sieve (JIS standard sieve). If this ratio of 32-mesh passage is less than 90%, the speed of depolymerization of paraformaldehyde is lowered, the reaction time is lengthened, and the degree of methylolation is degraded under the reaction conditions.

The amount of a formaldehyde to be used is preferable to be in the range of 2.5 to 10 mols per mol of cyclohexanecarboguanamine. If this amount is less than 2.5 mols, the reaction system possibly induces precipitation of monomethylolated cyclohexanecarboguanamine. Conversely, if the amount exceeds 10 mols, the excess formaldehyde brings about substantially no addition to the ratio of methylolation and represents no efficient use of the formaldehyde. Particularly, when the methylolation is required to be performed to such a high degree as to fall in the range of 3.5 to 4.0, it is preferable to use 5 to 10 mol times of formalin to cyclohexanecarboguanamine. The use of paraformaldehyde as a formaldehyde entails the possibility that the formaldehyde undergoes partial depolymerization and the paraformaldehyde gains in viscosity to the extent of impeding uniform stirring during the rise of the temperature of the reaction system to the reaction temperature when an alkali is added during the combination of raw materials. This disadvantage can be eliminated and, at the same time, the improvement in the degree of methylolation can be attained by making the addition of an alkali after the temperature of the reaction system has reached at least 50°C thereby adjusting the pH value in the range of 8 to 13 and diminishing the depolymerization during the rise of the temperature.

When the reaction solution is concentrated for the purpose of expelling water and the solvent therefrom, the possible formation of a hemiformal group can be repressed by adjusting the pH value in the range of 8 to 11, preferably 9 to 11.

The methylolated cyclohexanecarboguanamine which is obtained by the method of this invention possesses a degree of methylolation preferably in the range of 3.5 to 4.0, preferably 3.8 to 4.0.

The methylolated cyclohexanecarboguanamine obtained by the method of this invention gives rise to an alkyletherified cyclohexanecarboguanamine when it is alkyletherified by the use of an alcohol (B). By this method, a highly methylolated and etherified alkyletherified cyclohexanecarboguanamine can be produced with a relatively small amount of formaldehyde.

When a methylolated cyclohexanecarboguanamine of a low degree of methylolation obtained by the conventional method is used in this case, the ratio of alkyletherification is as low as 70% at most. When an methylolated cyclohexanecarboguanamine of a degree of methylolation of 3.5 to 4.0 obtained by the method of this invention is alkyletherified, the ratio of alkyl-etherification can be heightened very conspicuously. The alkyletherified cyclohexanecarboguanamine has the viscosity thereof lowered and the suitability thereof for the applications to be specifically described hereinbelow heightened in proportion as the degree of methylolation and the ratio of alkyletherification are augmented.

The alkyletherified cyclohexanecarboguanamine which is obtained by the method of this invention possesses a degree of methylolation preferably in the range of 3.5 to 4.0 and a ratio of alkyletherification preferably in the range of 90 to 100%.

For the purpose of producing the alkyletherified cyclohexanecarboguanamine in a highly etherified state, the reaction with an alcohol(B) is preferable to be performed twice as described in U.S. Patent No. 2,998,411, for example. In this case, after the first reaction is completed, the resultant reaction solution is concentrated to expel the unaltered alcohol and water therefrom. The adjustment of the pH value of the reaction solution in the range of 8 to 11, preferably 9 to 11, during the course of the concentration brings about a desirable effect of not only repressing the possible formation of a hemiformal group but also enabling the residual formaldehyde to promote the methylolation to a further extent.

Though the alcohol (B) to be used in effecting the alkyletherification is not specifically restricted, it is preferable to be an aliphatic alcohol of 1 to 10 carbon atoms, preferably an aliphatic alcohol of 1 to 4 carbon atoms. The amount of this alcohol to be used in each of the two reactions is in the range of 5 to 50 mols, preferably 5 to 15 mols, per mol of the methylolated cyclohexanecarboguanamine. The aliphatic alcohols which answer the description include methanol, ethanol, n-propanol, isopropanol, n-butanol, sec-butanol, isobutanol, heptanol, and octanol, for example.

The reaction temperature during the process of alkyletherification is generally below 50°C. When the resultant alkyletherified cyclohexanecarboguanamine is preferable to contain a condensate only in a small proportion, the reaction temperature is preferably below 35°C. By keeping the reaction temperature below 35°C, the proportion of the condensate can be lowered even below 5%. The alkyletherified cyclohexanecarboguanamine which is obtained as described above possesses a still lower viscosity and is used advantageously in various applications.

The content of the condensate in the alkyletherified cyclohexanecarboguanamine contemplated by the present invention represents the area ratio of a dimer and highermers which is determined by gel permeation chromatography as demonstrated in working examples to be cited hereinbelow.

A laminated sheet is obtained by impregnating a sheetlike article with a liquid containing the methylolated cyclohexanecarboguanamine and the alkyletherified cyclohexanecarboguanamine produced by the method of this invention and subsequently setting the impregnated sheetlike article.

The faced board of thermosetting resin using an methylolated cyclohexanecarboguanamine resin is disclosed in U.S. Patent No. 4,898,788. The resin thus used in the faced board is a solid resin and not a liquid resin according to the technique of this invention. The impregnation of a sheetlike article with the solid resin as used in U.S. Patent 4,898,788 necessitates use of an organic solvent. When the sheetlike article impregnated with this solid resin is dried with hot air, the resin possibly separates from the matrix or gives rise to blisters. In accordance with the present invention, since the methylolated cyclohexanecarboguanamine to be used therein retains a liquid state and exhibits solubility in water at normal room temperature, it has no use for any specific organic solvent. When the sheetlike article impregnated with the liquid methylolated cyclohexanecarboguanamine or alkyletherified cyclohexanecarboguanamine is dried with hot air, the resin is perfectly free from such adverse phenomena as separation from the matrix or formation of blisters.

In the case of a highly alkyletherified cyclohexanecarboguanamine, no use is found for any solvent because the viscosity thereof is low. Thus, the sheetlike article can be impregnated directly with this product.

The method to be adopted for the production of a laminted sheet by the use of an methylolated cyclohexanecarboguanamine or alkyletherified cyclohexanecarboguanamine of this invention which is in a liquid state at normal room temperature has no particular restriction. The production may be carried out by any of such conventional methods as disclosed in U.S. Patent No. 4, 898, 788, for example.

The following methods are typical examples.

(1) A method which comprises impregnating a sheetlike article with the methylolated cyclohexanecarboguanamine or alkyletherified cyclohexanecarboguanamine and thermally setting the impregnated sheetlike article under application of pressure.

(2) A method which comprises superposing two or more such impregnated sheetlike articles and thermally setting the superposed sheetlike articles under application of pressure.

(3) A method which comprises superposing at least one such impregnated sheetlike article and a sheetlike article impregnated with another thermosetting resin composition and/or at least one sheetlike article impregnated with a thermoplastic resin composition and thermosetting the superposed sheetlike articles under application of pressure.

(4) A method which comprises thermosetting at least one such impregnated sheetlike article under application of pressure thereby preparing a resin-impregnated sheetlike layer and laminating this resin-impregnating sheetlike layer through the medium of a suitable adhesive agent with at least one sheetlike article produced by impregnating with and setting another thermosetting resin composition and/or at least one sheetlike article impregnated with a thermoplastic resin.

(5) A method which comprises pasting at least one such impregnated sheetlike article to a substrate and thermosetting the resultant composite sheet under application of pressure.

(6) A method which comprises superposing at least one such impregnated sheetlike article, a sheetlike article impregnated with another thermosetting resin composition, and/or at least one sheetlike article impregnated with a thermoplastic resin composition and thermosetting the resultant superposed sheets under application of pressure.

The amount of the methylolated cyclohexanecarboguanamine or alkyletherified cyclohexanecarboguanamine to be used in impregnating the sheetlike article is in the range of 70 to 150% by weight, preferably 80 to 140% by weight, based on the amount of the sheetlike article.

The sheetlike article to be used in the production of the laminated sheet has no particular restriction except for the sole requirement that it should be a sheetlike article capable of being easily impregnated with a liquid substance. Paper and cloth are desirable sheetlike articles in respect that they are readily available commercially, capable of easy inscription with any desired pattern, and capable of easily producing a faced board or faced plywood excelling in quality.

During the process of thermal setting, a setting catalyst may be added as occasion demands to promote the setting. The setting catalyst is not particularly defined but may be any of the conventional setting catalysts fit for thermosetting resins. Examples are paratoluenesulfonic acid and ammonium chloride.

The substrate may be any of various materials without reference to the choice between natural and synthetic products or the choice between inorganic and organic products. The substrates which are advantageously usable herein include veneer, rigid fiber board, and particle board, for example.

The other thermosetting resins than the methylolated cylohexanecarboguanamine and alkyletherified cyclohexanecarboguanamine which are effectively usable in the production of the laminated sheet include alkyd resin, phenol resin, xylene resin, toluene resin, aminoaldehyde resin, and unsaturated polyester resin, for example. The thermoplastic resins which are effectively usable herein include homopolymers and copolymers of vinyl chloride, vinyl acetate, styrene, for example.

Now, this invention will be described more specifically below with reference to working examples which are intended to be illustrative of and not in any sense limitative of the spirit of this invention.

The data of "$^1$H-NMR," "high-speed liquid chromatography (hereinafter referred to as HPLC)," and "gel permeation chromatography (hereinafter referred to as GPC) given in the working examples are those determined by the following methods.

(1) Determination of $^1$H-NMR

This property was determined by using a test tube containing the solution of a given sample in dimethyl sulfoxide-d6 or chloroform-d

by the use of an instrument produced by Varian Corp and marketed under product code of "XL-300."

(2) Determination of HPLC

Apparatus - Instrument produced by Shimadzu Seisakusho Ltd. and marketed under product code of "LC-6A"
Column - Product of Shimadzu Technoresearch K.K. marketed under product code of "ODS-M"
Wavelength for detection = 210 nm
Developing solvent - Mixed solvent of aqueous 0.1 wt% phosphoric acid solution/acetonitrile

(3) Determination of GPC

Apparatus - Instrument produced by Toso K.K. and marketed under product code of "HLC-8020"
Column - Product of Toso K.K. marketed under product code of TSK 2000 HXL + TSK 3000 HXL
Means of detection - RI detector
Developing solvent - Tetrahydrofuran
Column temperature - 40°C

Example 1

In a three-necked flask having an inner volume of 300 ml and provided with a stirrer, a reflux condenser, and a thermometer, 19.3 g (100 m.mols) of cyclohexanecarboguanamine, 19.6 g (600 m.mols) of granular 92% paraformaldehyde, 14.6 g of water, and 2.7 g of methyl alcohol (the amount of the water in the reaction system inclusive of the water in the paraformaldehyde was 16.2 g, accounting for 90% by weight of formaldehyde, and the amount of methyl alcohol accounts for 15% by weight of formaldehyde) were mixed. The resultant reaction solution was adjusted to pH 10 by the addition of an aqueous sodium hydroxide solution and then simultaneously stirred and heated to 60°C. It was then further stirred at 60°C for one hour with the pH value thereof kept at 10 ± 0.5. When it was subsequently cooled to room temperature, there was obtained a transparent homogeneous liquid. By HPLC, the reaction solution was found not to contain unaltered cyclohexanecarboguanamine. By $^1$H-NMR analysis, it was found to have attained addition of an average of 3.58 formaldehyde molecules per molecule of cyclohexanecarboguanamine.

During the process of the reaction, cyclohexanecarboguanamine and paraformaldehyde were uniformly dissolved after the elapse of about 10 minutes following the heating up to 60°C. Thereafter, no solid substance was precipitated in the reaction solution.

Example 2

The procedure of Example 1 was repeated, except that the amount of methyl alcohol was changed to 0.9 g (an amount accounting for 5% by weight based on the amount of formaldehyde). The methylolated cyc-

7

lohexanecarboguanamine consequently obtained was found to have attained addition of an average of 3.65 formaldehyde molecules per molecule of cyclohexanecarboguanamine.

Example 3

The procedure of Example 1 was repeated, except that the addition of methyl alcohol was omitted. The methylolated cyclohexanecarboguanamine was found to have attained addition of an average of 3.77 formaldehyde molecules per molecule of cyclohexanecarboguanamine.

Example 4

The procedure of Example 1 was repeated, except that the amount of water was changed to 25.4 g (the total amount in the reaction solution was 27 g, or 150% by weight based on the amount of formaldehyde) and the addition of methyl alcohol was omitted. The methylolated cyclohexanecarboguanamine consequently obtained was found to have attained addition of an average of 3.55 formaldehyde molecules per molecule of cyclohexanecarboguanamine.

Example 5

The procedure of Example 1 was repeated, except that the amount of water was changed to 5.6 g (the total amount of water in the reaction solution was 7.2 g, or 40% by weight based on the amount of formaldehyde) and the addition of methyl alcohol was omitted. The methylolated cyclohexanecarboguanamine consequently obtained was found to have attained addition of an average of 3.80 formaldehyde molecules per molecule of cyclohexanecarboguanamine.

Example 6

In a three-necked flask having an inner volume of 300 ml and provided with a stirrer, a reflux condenser, and a thermometer, 19.3 g (100 m.mols) of cyclohexanecarboguanamine, 19.6 g (600 m.mols) of granular 92% paraformaldehyde, and 40.0 g of toluene (the amount of the water in the reaction solution inclusive of the water in the paraformaldehyde was 1.6 g, or 9% by weight based on the amount of formaldehyde) were mixed. The resultant reaction solution was adjusted to pH 10 by the addition of an aqueous sodium hydroxide solution and then simultaneously mixed and heated to 60°C. It was then further stirred at 60°C for one hour, with the pH value kept at 10 ± 0.5. When it was cooled to room temperature, it was separated into two layers, the upper layer of toluene and the lower layer of methylolated cyclohexanecarboguanamine. By HPLC analysis, the lower layer was found to contain no unaltered cyclohexanecarboguanamine. By $^1$H-NMR analysis, the reaction solution was found to have attained addition of an average of 3.85 formaldehyde molecules per molecule of cyclohexanecarboguanamine. During the course of this reaction, cyclohexanecarboguanamine and paraformaldehyd were uniformly dissolved after the elapse of about 30 minutes following the heating up to 60°C. Thereafter, the reaction solution formed no solid precipitate. The toluene layer at the end of the reaction was found to contain substantially no methylolated cyclohexanecarboguanamine.

Example 7

The procedure of Example 6 was repeated, except that 20.0 g (600 m.mols) of powdered 90% paraformaldehyde having a particle diameter distribution such that 93% of the particles passed through a 32-mesh sieve was used instead as a paraformaldehyde (the amount of the water in the reaction solution was 2.0 g of the water present in the paraformaldehyde, accounting for 11% by weight based on the amount of formaldehyde). The methylolated cyclohexanecarboguanamine consequently obtained was found to have attained addition of an average of 3.88 formaldehyde molecules per molecule of cyclohexanecarboguanamine.

Example 8

The procedure of Example 6 was repeated, except that the adjustment of the pH value of the freshly prepared reaction solution was omitted and, after therise of the reaction temperature to 60°C, the reaction solution was adjusted to pH 10 by the addition of an aqueous sodium hydroxide solution. The methylolated cyclohexanecarboguanamine was found to have attained addition of an average of 3.87 formaldehyde molecules per molecule of cyclohexanecarboguanamine.

### Example 9

The procedure of Example 3 was repeated, except that the pH value to which the reaction solution was adjusted was changed from 10 ± 0.5 to 8.5 ± 0.5. The methylolated cyclohexanecarboguanamine consequently obtained was found to have attained addition of an average of 3.70 formaldehyde molecules per molecule of cyclohexanecarboguanamine.

### Control 1

The procedure of Example 1 was repeated, except that the amount of methyl alcohol was changed to 5.4 g (30% by weight based on the amount of formaldehyde).

The methylolated cyclohexanecarboguanamine consequently obtained was found to have attained addition of an average of 3.33 formaldehyde molecules per molecule of cyclohexanecarboguanamine.

### Control 2

The procedure of Example 1 was repeated, except that 48.6 g (600 m.mols) of 37% formalin was used as a formaldehyde and the addition of water and methyl alcohol was omitted (the water in the reaction solution was 25.8 g, or 143% by weight based on the amount of formaldehyde and methyl alcohol contained in the formalin was 4.9 g, or 27% by weight based on the amount of formaldehyde). The methylolated cyclohexanecarboguanamine consequently obtained was found to have attained addition of an average of 3.20 formaldehyde molecules per molecule of cyclohexanecarboguanamine.

### Control 3

In a three-necked flask having an inner volume of 300 ml and provided with a stirrer, a reflux condenser, and a thermometer, 19.3 g (100 m.mols) of cyclohexanecarboguanamine, 22.5 g (600 m.mols) of 80% paraformaldehyde, 22.5 g of water, and 0.12 g of an aqueous 10 wt% sodium carbonate solution were mixed. The amounts of methyl alcohol and water contained in the resultant solution were respectively 0% by weight and 150% by weight based on the amount of formaldehyde. This solution was simultaneously stirred and heated to 90°C. It was then stirred at 90°C for 10 minutes. The methylolated cyclohexanecarboguanamine consequently obtained was found to have attained addition of an average of 3.24 formaldehyde molecules per molecule of cyclohexanecarboguanamine.

### Example 10

The solution of methylolated cyclohexanecarboguanamine obtained in Example 5 was adjusted to pH 10 by the addition of an aqueous sodium hydroxide solution and then subjected to vacuum concentration at 60°C under 60 mmHg. The resultant viscous liquid was mixed with 10 mols, per mol of methylolated cyclohexanecarboguanamine, of methyl alcohol. The produced mixture was adjusted to pH 2.8 by the addition of concentrated nitric acid and then stirred at 40°C for two hours. The resultant reaction solution was adjusted to pH 10 by the addition of an aqueous NaOH solution, subjected to vacuum concentration at 60°C under 60 mmHg, again mixed with methyl alcohol, adjusted to pH 2.8 by the addition of concentrated nitric acid, and further stirred at 40°C for two hours.

The produced reaction solution was neutralized with an aqueous NaOH solution and subjected to vacuum concentration at 60°C under 60 mmHg, to obtain an alkyletherified cyclohexanecarboguanamine. By $^1$H-NMR analysis, this alkyletherified cyclohexanecarboguanamine was found to have a degree of methylolation of 3.92 and a ratio of etherification of 98%. By GPC analysis, it was found to contain 7% of condensate in RI area ratio.

### Example 11

The procedure of Example 10 was repeated, except that the solution of methylolated cyclohexanecarboguanamine obtained in Example 5 was neutralized with concentrated nitric acid and then concentrated. By $^1$H NMR analysis, the resultant alkyletherified cyclohexanecarboguanamine was found to have a degree of methylolation of 3.80 and a ratio of etherification of 97%. By GPC analysis, it was found to contain 9% of condensate in RI area ratio.

### Example 12

The solution of methylolated cyclohexanecarboguanamine obtained in Example 5 was again adjusted to pH 10 by the addition of an aqueous NaOH solution and subjected to vacuum concentration at 60°C under 60 mmHg. The resultant viscous liquid was mixed with 10 mols, per mol of methylolated cyclohexanecarboguanamine, of methyl alcohol, adjusted to pH 2.8 by the addition of concentrated nitric acid, and then stirred at 40°C for two hours. The produced reaction solution was neutralized to pH 7 by the addition of an aqueous NaOH solution, subjected to vacuum concentration at 60°C under 60 mmHg, mixed with methyl alcohol, adjusted to pH 2.8 by the addition of concentrated nitric acid, and stirred at 40°C for two hours. The reaction solution consequently obtained was neutralized by the addition of an aqueous NaOH solution and subjected to vacuum concentration at 60°C under 60 mmHg, to produce alkyletherified cyclohexanecarboguanamine. By $^1$H-NMR analysis, this alkyletherified cyclohexanecarboguanamine was found to possess a degree of methylolation of 3.72 and a ratio of etherification of 96%. By GPC analysis, it was found to contain 9% of condensate.

Example 13

The procedure of Example 10 was repeated, except that the two reactions of etherification were both carried out at 30°C. By $^1$H-NMR, the resultant alkyletherified cyclohexanecarboguanamine was found to have a degree of methylolation of 3.92 and a ratio of etherification of 98%. By GPC analysis, it was found to contain 3% of condensate.

Example 14

The solution of methylolated cyclohexanecarboguanamine obtained in Example 7 was adjusted to pH 10 by the addition of an aqueous sodium hydroxide and subjected to vacuum concentration at 60°C under 60 mmHg. The resultant viscous liquid was mixed with water to obtain an aqueous 50 wt% methylolated cyclohexanecarboguanamine solution. 100 g of this aqueous solution was neutralized, adjusted to pH 7, and mixed with 0.8 g of p-toluenesulfonic acid and 0.7 g of lauric acid. A faced sheet 0.2 mm in thickness and 120 g/m$^2$ in basis weight was impregnated with the resultant and dried in draft at room temperature. The air-dried faced paper was dried in hot air at 100°C for 15 minutes, to obtain a faced paper (1) impregnated with 120 ± 5% of methylolated cyclohexanecarboguanamine.

This faced paper (1) was perfectly free from such adverse phenomena as resin separation and formation of blisters and was easy to handle. This faced paper (1), a phenol-impregnated kraft paper 0.3 mm in thickness and 242 g/m$^2$ in basis weight, and an 80-count white velvet cloth impregnated with vinyl chloride resin were superposed and subjected to thermocompression bonding with the aid of a chromium-plated specular plate under the conditions of 150°C and 25 kg/cm$^2$, to obtain a faced sheet (1).

As shown in Table 1, this faced sheet (1) was not inferior at all in quality to a faced sheet using an methylolated cyclohexanecarboguanamine resin.

Example 15

A faced paper 0.2 mm in thickness and 120 g/m$^2$ in basis weight was impregnated with a liquid obtained by mixing 50 g of the alkyletherified cyclohexanecarboguanamine obtained in Example 10 with 2.5 g of p-toluenesulfonic acid and 0.7 g of lauric acid. The impregnated faced paper was dried in draft at room temperature. The faced paper was dried with hot air at 100°C for 30 minutes, to obtain a faced paper (2) impregnated with 120 ± 5% of alkyletherified cyclohexanecarboguanamine. This faced paper (2) was perfectly free from such adverse phenomena as resin separation and formation of blisters and was easy to handle.

The faced paper (2), a phenol-impregnated kraft paper 0.3 mm in thickness and 242 g/m$^2$ in basis weight, and an 80-count white velvet cloth impregnated with vinyl chloride resin were superposed and subjected to thermocompression bonding with the aid of a chromium-plated specular plate under the conditions of 150°C and 25 kg/cm$^2$, to obtain a faced sheet (2).

As shown in Table 1, this faced plate (2) was not inferior at all in quality to the faced plate using an methylolated cyclohexanecarboguanamine.

Control 4

In a three-necked flask having an inner volume of 300 ml and provided with a stirrer, a reflux condenser, and a thermometer, 19.3 g (100 m.mols) of cyclohexanecarboguanamine and 24.5 g (302 m.mols) of an aqueous 37% formalin solution were mixed and the resultant reaction solution was adjusted to pH 8.5 by the addition of an aqueous 10% sodium carbonate solution. The reaction solution was simultaneously heated and stirred at 90°C for two hours, then heated at 100°C for four hours to promote condensation and, at the same time, expel water and the unaltered formaldehyde, and further heated to 120°C to expel the residual water and unaltered formaldehyde and obtain a solid methylolated cyclohexanecarboguanamine resin intended for comparison. This comparison grade methylolated cyclohexanecarboguanamine resin was found to have a degree of methylolation of 2.5.

A resin solution for comparison was prepared by combining 50 parts by weight of the comparison grade methylolated cyclohexanecarboguanamine, 1.0 part by weight of paratoluenesulfonic acid, 0.75 part by weight of lauric acid, 40 parts by weight of methanol, and 10 parts by weight of toluene. A faced paper 0.2 mm in thickness and 120 g/m² in basis weight was impregnated with the resin solution, dried in draft at room temperature, and dried with hot air at 100°C for 20 minutes, to obtain an impregnated faced paper intended for comparison. In this comparison grade impregnated faced paper, the resin lodged therein partially formed blisters and was liable to separate from the matrix unless the faced paper was handled advertently.

This comparison grade impregnated faced paper, a phenol-impregnated kraft paper 0.3 mm in thickness and 242 g/m² in basis weight, and an 80-count white velvet cloth impregnated with vinyl chloride were superposed and subjected to thermocompression bonding by the use of a chromium-plated specular plate under the conditions of 150°C and 25 kg/cm², to obtain a faced sheet (1) intended for comparison. The properties of this comparison grade faced sheet are shown in Table 1.

## Table 1

| Test for evaluation | Example | | Control |
|---|---|---|---|
| | 14 | 15 | 4 |
| Surface hardness | O | O | O |
| Lightfastness | O | O | O |
| Waterproofness | O | O | O |
| Stain resistance | O | O | O |
| Resistance to cracking | O | O | O |
| Resistance to chemicals | O | O | O |

Table 1 shows the results of evaluation of the indicated properties performed on the faced sheets (1) and (2) and the comparison grade faced sheet (1) obtained respectively in Examples 14 and 15 and Control 4. The properties were rated on the following scales.

The properties suffixed by (J) represent those tested in accordance with JIS K6902 (1977).

Surface hardness - This property was determined by subjecting a sample to a scratch hardness A test specified for JAS special plywood. The results were rated on the two-point scale, wherein stands for an acceptable product and x for a rejectable product.

Lightfastness - This property was determined by exposing a sample to the radiation in a carbon arc fade tester for 200 hours to find degree of discoloration, △b (lab). The results were rated on the three-point scale, wherein O stands for less than 0.5, △ for not less than 0.5 and less than 3, and X for not less than 3.

Waterproofness (J) - This property was determined by immersing a sample in boiling water to find the degree of resistance to boiling. The results were rated on the two-point scale, wherein O stands for absencee of interlayer separation and X for presence thereof.

Stain resistance (J) - This property was determined by subjecting a sample to a test for stain resistance. The results were rated on the three-point scale, wherein O stands for absence of change, △ for presence of smear readily removable by rubbing with dry cloth or for presence of smear which slightly remained after rubbing with dry cloth, and X for presence of heavy smear.

Resistance to cracking - This property was determined by punching a hole in a sample and examining the

EP 0 436 393 A2

appearance of the sample. The results were rated on the three-point scale, wherein ○ stands for absence of change, △ for presence of burrs along the edge of the hole, and X for presence of chippings, cracks, or separation.

Resistance to chemicals - This property was determined by subjecting a sample to the alkali-resistance test and the acid-resistance test specified for JAS special plywood. The results were rated on the two-point scale, wherein ○ stands for absence of change and X for presence of change.

## Claims

1. A method for the manufacture of an methylolated cyclohexanecarboguanamine by subjecting cyclohexanecarboguanamine to the methylolating reaction with a formaldehyde while keeping the amount of an alcohol (A) present during the process of methylolating reaction below 20% by weight based on the amount of said formaldehyde and keeping the pH value of the reaction system in the range of 8 to 13 and the temperature thereof in the range of 50° to 80°C between the time said reaction is started and the time said reaction is completed.

2. A method according to claim 1, wherein the average degree of methylolation of the produced methylolated cyclohexanecarboguanamine is in the range of 3.5 to 4.0.

3. A method according to claim 1, wherein the amount of said alcohol (A) is not less than 10% by weight based on the amount of said formaldehyde.

4. A method according to claim 1, wherein the temperature of the reaction system is in the range of 55° to 70°C .

5. A method according to claim 1, wherein said reaction is carried out with the pH value of said reaction system kept in the range of 9 to 11.

6. A method according to claim 1, wherein the amount of water present during the process of said reaction is not more than 100% by weight based on the amount of said formaldehyde.

7. A method according to claim 6, wherein the amount of water present during the process of said reaction is not more than 50% by weight.

8. A method according to claim 1, wherein said reaction is carried out by using as a medium therefor a solvent substantially insoluble in water.

9. A method according to claim 8, wherein said substantially water-insoluble solvent is at least one member selected from the group consisting of aromatic hydrocarbons and aliphatic hydrocarbons.

10. A method according to claim 9, wherein said substantially water-insoluble solvent is an aromatic hydrocarbon.

11. A method according to claim 10, wherein said aromatic hydrocarbon is at least one member selected from the group consisting of alkyl group-substituted benzenes and unsubstituted benzene.

12. A method according to claim 1, wherein said formaldehyde is paraformaldehyde.

13. A method according to claim 12, wherein said reaction is performed with the pH value thereof kept in the range of 8 to 13 after the temperature of said reaction system has reached at least 50°C.

14. A method according to claim 12, wherein said paraformaldehyde possesses a particle diameter distribution such that not less than 90% of the particles pass through a 32-mesh sieve.

15. A method according to claim 1, wherein the pH value is maintained in the range of 8 to 11 while the reaction solution containing methylolated cyclohexanecarboguanamine is concentrated.

12

16. A method for the manufacture of an alkyletherified cyclohexanecarboguanamine, which comprises subjecting the methylolated cyclohexanecarboguanamine obtained by the method according to any of claims 1 to 15 to alkyletherification with an alcohol (B).

17. A method according to claim 16, wherein the average degree of methylolation and ratio of etherification of the resultant alkyletherified cyclohexanecarboguanamine are respectively in the range of 3.5 to 4.0 and the range of 90 to 100%.

18. A method according to claim 16, wherein said alkyletherification reaction is repeated two times, and after finishing a first reaction, a reaction mixture is concentrated at pH 8 to 11 and then a second reaction is carried out.

19. A method according to claim 16, wherein the temperature of the reaction system is not higher than 35°C during the process of said alkyletherification.

20. A method according to claim 19, wherein the proportion of a condensate contained in the produced alkyletherified cyclohexanecarboguanamine is not more than 5%.

21. A laminated sheet comprising a thermosetting resin-impregnated sheet layer obtained by impregnating a sheetlike article with a liquid containing an methylolated cyclohexanecarboguanamine obtained by the method of manufacture according to any of claims 1 to 3 and possessing a degree of methylolation in the range of 3.6 to 4.0 and setting the resultant impregnated sheetlike article.

22. A thermosetting resin-impregnated sheet, produced by a process of manufacture which comprises impregnating a sheetlike article with a liquid containing an alkyletherified cyclohexanecarboguanamine obtained by the method of manufacture according to claim 16 and possessing a degree of methylolation in the range of 3.6 to 4.0 and a ratio of alkyletherification in the range of 90 to 100% and subsequently setting the resultant impregnated sheetlike article.